(19) Europäisches Patentamt / European Patent Office / Office européen des brevets

(11) **EP 3 306 342 A1**

(12) **EUROPEAN PATENT APPLICATION**
published in accordance with Art. 153(4) EPC

(43) Date of publication:
**11.04.2018 Bulletin 2018/15**

(51) Int Cl.:
***G01S 13/18*** (2006.01)

(21) Application number: **15894079.1**

(22) Date of filing: **29.05.2015**

(86) International application number:
**PCT/JP2015/065563**

(87) International publication number:
**WO 2016/194044 (08.12.2016 Gazette 2016/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Mitsubishi Electric Corporation Chiyoda-ku Tokyo 100-8310 (JP)**

(72) Inventor: **SHIMAZU, Yasuaki Tokyo 100-8310 (JP)**

(74) Representative: **Sajda, Wolf E. Meissner Bolte Patentanwälte Rechtsanwälte Partnerschaft mbB Postfach 86 06 24 81633 München (DE)**

(54) **TARGET DETECTION DEVICE AND TARGET DETECTION METHOD**

(57) Provided are a target detection device and the like having improved detectable range performance in which a plurality of range gates are set to be slightly shifted in a time axis direction so that drop of received power is suppressed. The target detection device includes: a signal transmit/receive unit (1 to 5) configured to emit a transmission pulse to air by a transmit/receive antenna, and to receive a received signal being a reflection wave of the transmission pulse by the transmit/receive antenna; and a target detection unit (6 to 12) configured to: perform A/D conversion on the received signal; set a plurality of range gates to be sequentially shifted in terms of time based on a sampling clock, each of the plurality of range gates defining a data acquisition position; obtain target detection signals each having a signal intensity that is variable depending on a ratio of received data obtained through the A/D conversion of the received signal to the each of the plurality of range gates in terms of time; and output a signal indicating that target detection is positive based on the signal intensity of the each of the target detection signals.

FIG. 1

**Description**

Technical Field

The present invention relates to a target detection device and the like configured to detect a target by receiving a signal reflected by the target through a pulse-shaped radio wave emitted to the air.

Background Art

As types of radars for detecting a target, there have been low pulse repetition frequency (LPRF) radars having a sufficiently long period of time between transmission and reception with respect to a round trip distance to a target. In addition, in order to improve target detection performance and to acquire speed information on a target, there have been used, for example, medium pulse repetition frequency (MPRF) radars and high pulse repetition frequency (HPRF) radars having a shortened pulse repetition interval (PRI).

The HPRF radar, in which a pulse repetition interval is short and the number of range gates is one or a few at the most, is configured to detect a target by lowering a band frequency for each of the range gates using a digital filter and extracting a Doppler frequency of the target (for example, see Non Patent Literature 1).

Citation List

Non Patent Literature

[NPL 1] George W. Stimson, "INTRODUCTION TO AIRBORNE RADAR", Hughes Aircraft Co, June 1983, p. 455

Summary of the Invention

Technical Problem

The maximum detectable range and the minimum detectable signal power of the radar that is a target detection device as described above have a relationship expressed by Expression (1).

$$R_{max}^4 = \frac{P_t \cdot G^2 \cdot \lambda^2 \cdot \sigma}{(4\pi)^3 \cdot S_{min}} \qquad (1)$$

In Expression (1),
the following designations are used:

$R_{max}$ maximum detectable range;
$P_t$ transmission power [W];
G antenna gain;
$\Lambda$ wavelength of radio wave [m];
$\Sigma$ radar cross section of target [m$^2$]; and
$S_{min}$ minimum detectable signal power [W].

When a received signal position of a received wave, which is reflected by a target, and the position of the range gate do not match each other in terms of time, received power is weakened to fall below the minimum detectable signal power $S_{min}$. As a result, target detection cannot be performed in the maximum detectable range.

The present invention has been made in view of the foregoing, and has an object to provide a target detection device and the like having improved detectable range performance in which a plurality of range gates are set to be slightly shifted in a time axis direction so that drop of received power is suppressed.

Solution to the Problem

According to one embodiment of the present invention, there are provided a target detection device and the like, including:

- a signal transmit/receive unit configured to emit a transmission pulse to air by a transmit/receive antenna, and to receive a received signal being a reflection wave of the transmission pulse by the transmit/receive antenna; and
- a target detection unit configured to: perform A/D conversion on the received signal; set a plurality of range gates to be sequentially shifted in terms of time based on a sampling clock, each of the plurality of range gates defining a data acquisition position; obtain target detection signals each having a signal intensity that is variable depending on a ratio of received data obtained through the A/D conversion of the received signal to the each of the plurality of range gates in terms of time; and output a signal indicating that target detection is positive based on the signal intensity of the each of the target detection signals.

## Advantageous Effects of Invention

According to the present invention, the plurality of range gates are set at the positions slightly shifted in the time axis direction, and are simultaneously subjected to the processing so that received power from a target is effectively utilized. The target detection device and the like having improved detectable range performance can therefore be provided.

## Brief Description of Drawings

FIG. 1     is a diagram for illustrating an example of the configuration of a target detection device according to a first embodiment of the present invention.

FIG. 2     is a time chart for illustrating an example of the operation of the target detection device according to the present invention.

FIG. 3     is a diagram for illustrating an example of the configuration of a target detection device according to a second embodiment of the present invention.

## Description of Embodiments

Now, a target detection device and the like according to each of embodiments of the present invention are described with reference to the drawings. The same or corresponding portions are denoted by the same or corresponding reference symbols.

## First Embodiment

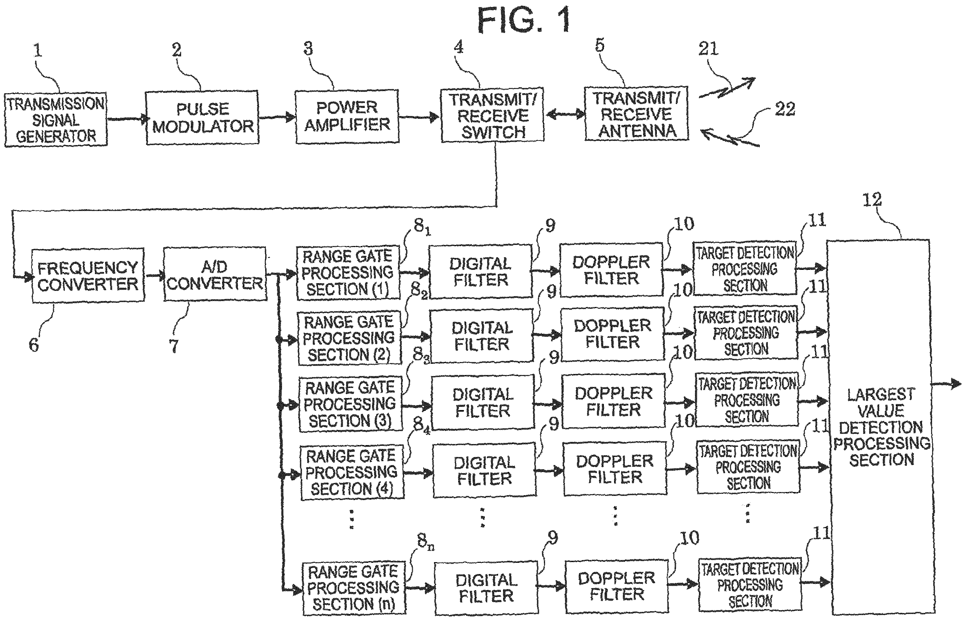

FIG. 1 is a diagram for illustrating an example of the configuration of a target detection device according to a first embodiment of the present invention. The target detection device includes, as illustrated in FIG. 1, a signal transmit/receive unit including a transmission signal generator 1, a pulse modulator 2, a power amplifier 3, a transmit/receive switch 4, and a transmit/receive antenna 5, and a target detection unit including a frequency converter 6, an A/D converter 7, a plurality of, that is, n (n is an integer of two or more) range gate processing sections (1 to n) $8_1$ to $8_n$, n digital filters 9, n Doppler filters 10, n target detection processing sections 11, and a largest value detection processing section 12 configured to receive, as input, output of each of the target detection processing sections 11.

A coherent transmission signal is output from the transmission signal generator 1 to be transmitted to the pulse modulator 2. The pulse modulator 2 shapes the coherent transmission signal into a pulse shape. The power of the signal shaped into the pulse shape is amplified by the power amplifier 3. The signal having the amplified power is transmitted to the transmit/receive antenna 5 by the transmit/receive switch 4 at transmission timing, and is then emitted to the air from the transmit/receive antenna 5 as a transmission pulse 21.

The radio wave emitted to the air is reflected by, for example, a target, and is then received by the transmit/receive antenna 5 as a received signal 22. The received signal 22 is transmitted to the frequency converter 6 by the transmit/receive switch 4 at reception timing. The received radio frequency (RF) signal is down-converted into an intermediate frequency (IF) band by the frequency converter 6. The down-converted signal, which is an analog signal, is converted by the A/D converter 7 into received data, which is a digital signal.

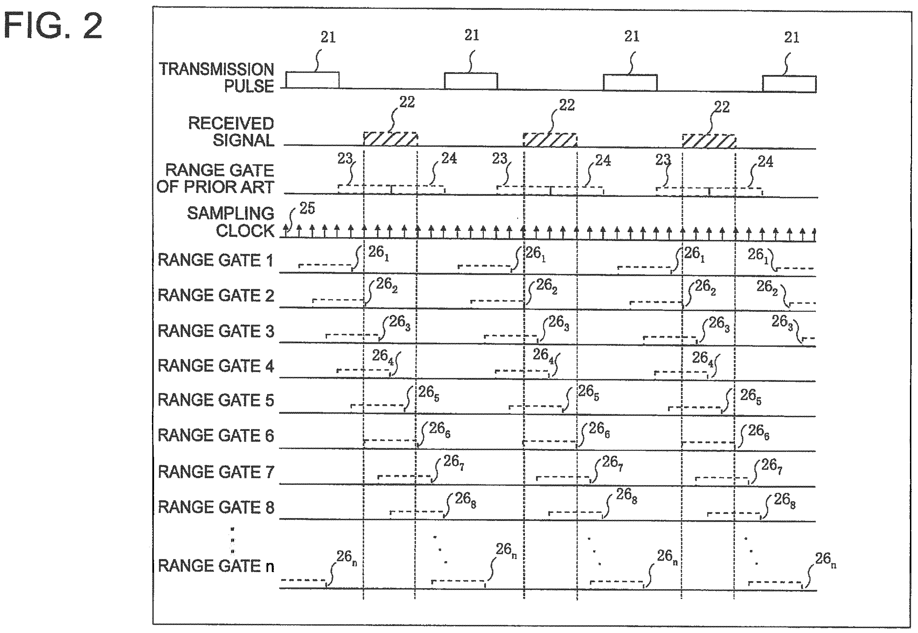

The range gate processing sections (1 to n) $8_1$ to $8_n$ have the same interval. However, as illustrated in FIG. 2 referred to later, processing of extracting the received data, which is the digital signal obtained through the conversion by the A/D converter 7, is performed at each of range gates having data acquisition positions that are slightly shifted in terms of time. The extracted signal is transmitted to the digital filter 9.

The digital filter 9 passes a target having a frequency shifted by a Doppler frequency therethrough to suppress clutter outside the band frequency of the digital filter.

Output of the digital filter 9 is decomposed to frequency components by the Doppler filter 10. Specifically, the Doppler filter 10 performs, for example, Fast Fourier Transform (FFT) on the target signal having the frequency shifted by the Doppler frequency by the digital filter 9, to thereby divide the target signal into a plurality of frequency domains.

The target detection processing section 11 performs target detection processing on the output of the Doppler filter 10, to thereby extract a Doppler frequency of the target.

When each of the range gate processing sections (1 to n) $8_1$ to $8_n$ extracts received data indicating that no target exists, output of the target detection processing sections 11 indicates that nothing is detected. When any one of the range gate processing sections (1 to n) $8_1$ to $8_n$ extracts received data indicating that a target exists, as output results from the target detection processing sections 11, there are obtained results having the same Doppler frequency and signal intensities that are different from each other depending on a ratio indicating how much the target is included. Each of the target detection processing sections 11 outputs a target detection signal having a signal intensity that is variable depending on the ratio of the received data to the range gate in terms of time.

The largest value detection processing section 12 detects a target detection signal having the largest signal intensity among the target detection signals detected by the respective target detection processing sections 11, and outputs that signal as a target signal indicating the detected target.

FIG. 2 is a time chart for illustrating an example of the operation of the target detection device according to the present invention. A signal reflected by, for example, a target through the transmission pulse 21 from the transmit/receive antenna 5 is received as the received signal 22. When a duty ratio between transmission and reception is 33 %, in the related art, two range gates having continuous regions on a time axis, namely, a range gate 23 and a range gate 24 in the range gate processing section as illustrated in FIG. 2 are used for processing of the received signal 22, that is, received data.

In this example, the received signal 22 is received right in the middle of the reception periods of the range gate 23 and the range gate 24. Consequently, each of the range gates 23 and 24 can receive only half of power from the target, and signal intensities are thus low. As a result, target detection cannot be performed in the maximum detectable range.

The received signal 22 is input in units of a sampling clock 25, and hence the range gates are set based on the sampling clock. A range gate 1 ($26_1$) to a range gate n ($26_n$) respectively represent the range gate of the range gate processing section (1) $8_1$ to the range gate of the range gate processing section (n) $8_n$.

The timing at which transmission and reception is switched by the transmit/receive switch 4 described above does not necessarily depend on the sampling clock. The sampling clock is timing of the digital signal in the A/D conversion, or a clock that has a band frequency lowered by the digital filter, that is, a frequency lower than that of the timing clock of the A/D conversion.

In FIG. 2, the time length of the range gate 1 ($26_1$) to the range gate n ($26_n$) is the same as the time length of the transmission pulse 21, which is set in advance, in consideration of, for example, the time length of the received signal 22, namely, the received data. Based on the sampling clock 25, the range gate 1 ($26_1$) to the range gate n ($26_n$) are set to be sequentially shifted from the adjacent range gates in terms of time by the interval of the sampling clock 25, that is, are shifted in the time axis direction so that the adjacent range gates partially overlap each other.

In the state illustrated in FIG. 2, no target is detected at the range gate 1 ($26_1$) of the range gate processing section (1) $8_1$, the range gate 2 ($26_2$) of the range gate processing section (2) $8_2$, and the range gate n ($26_n$) of the range gate processing section (n) $8_n$ because the received signal 22 is included in none of those range gates.

In the range gate 3 ($26_3$) of the range gate processing section (3) $8_3$, 1/4 of the received signal 22 is included, and hence when the intensity of a signal from the target is large, the target is detected.

In the range gate 4 ($26_4$) of the range gate processing section (4) $8_4$ and the range gate 8 (26s) of the range gate processing section (8) 8s, 1/2 of the received signal 22 is included, and hence when the intensity of a signal from the target is large, the target is detected.

In the range gate 5 (26s) of the range gate processing section (5) $8_5$ and the range gate 7 ($26_7$) of the range gate processing section (7) $8_7$, 3/4 of the received signal 22 is included.

In the range gate 6 ($26_6$) of the range gate processing section (6) $8_6$, which matches the received signal 22, the signal intensity is the largest.

In the example of FIG. 2, the interval of the sampling clock 25 and the shift amount of the positions of the range gates in terms of time match each other. However, when the sampling clock interval is short or when the scale of hardware is limited, the range gates may be thinned out even though some loss occurs in such a case. Specifically, for example, the range gates (1 to n) may be set to be sequentially shifted in terms of time at every set of a plurality of clock intervals of the sampling clock 25.

Further, in the example of FIG. 2, the range gates are also set at the positions of the transmission pulse 21, but the range gates may be set not to overlap the transmission pulse 21.

When the range gates are set to be shifted in terms of time in this way, the received signal can be effectively utilized, and large received power can thus be obtained.

According to the first embodiment, large received power is obtained with the use of the plurality of range gates. There is therefore provided an effect of enabling improvement of detectable range performance.

Second Embodiment

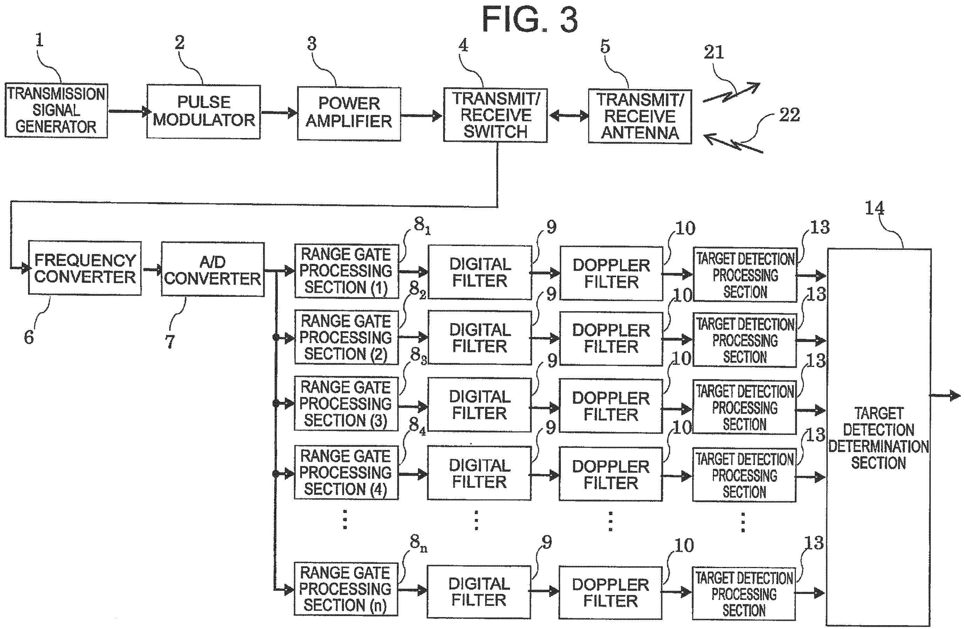

FIG. 3 is a diagram for illustrating an example of the configuration of a target detection device according to a second embodiment of the present invention. When being compared to the configuration of the first embodiment illustrated in FIG. 1, the second embodiment illustrated in FIG. 3 differs from the first embodiment in the processing of target detection processing sections 13, and the processing of a target detection determination section 14 configured to process output of the target detection processing sections 13.

The frequency converter 6, the A/D converter 7, the range gate processing sections (1 to n) $8_1$ to $8_n$, the digital filters 9, the Doppler filters 10, the target detection processing sections 13, and the target detection determination section 14 construct a target detection unit.

Next, the operation of the target detection device according to the second embodiment is described. In FIG. 3, the signal transmit/receive unit including the components from the transmission signal generator 1 to the transmit/receive antenna 5 is similar to that of the first embodiment.

Further, the components from the frequency converter 6 to the Doppler filters 10, which are configured to process the received signal, are also similar to those of the first embodiment.

The target detection processing section 13 performs target detection processing on output of the Doppler filter 10, to thereby extract a Doppler frequency of a target.

When each of the range gate processing sections (1 to n) $8_1$ to $8_n$ extracts received data indicating that no target exists, output of the target detection processing sections 13 indicates that nothing is detected. When any one of the range gate processing sections (1 to n) $8_1$ to $8_n$ extracts received data indicating that a target exists, output results from the target detection processing sections 13 have the same Doppler frequency and provide detection results that are different from each other due to signal intensities depending on a ratio indicating how much the target is included.

Each of the target detection processing sections 13 outputs a detection signal indicating that the target detection is positive when the signal intensity of a target detection signal, which has a signal intensity that is variable depending on the ratio of the received data to the range gate in terms of time, is equal to or more than a determination value set in advance.

The target detection determination section 14 outputs a target signal indicating that the target detection is positive when at least one of the n target detection processing sections 13 outputs the detection signal indicating that the target detection is positive.

According to the second embodiment, information on the signal intensity of a target is not obtained, but large received power is obtained with the use of the plurality of range gates similarly to the first embodiment. There is therefore provided an effect of enabling improvement of the detectable range performance.

As described above, according to the target detection device of each embodiment, large received power can be obtained with the use of the plurality of range gates that are shifted in terms of time, and the effect of enabling improvement of the detectable range performance is obtained.

Industrial Applicability

The target detection device and the target detection method according to the present invention are applicable to target detection devices used in various fields.

**Claims**

1.   A target detection device, comprising:

- a signal transmit/receive unit configured to emit a transmission pulse to air by a transmit/receive antenna, and to receive a received signal being a reflection wave of the transmission pulse by the transmit/receive antenna; and
- a target detection unit configured to: perform A/D conversion on the received signal; set a plurality of range gates to be sequentially shifted in terms of time based on a sampling clock, each of the plurality of range gates defining a data acquisition position; obtain target detection signals each having a signal intensity that is variable depending on a ratio of received data obtained through the A/D conversion of the received signal to the each of the plurality of range gates in terms of time; and output a signal indicating that target detection is positive based on the signal intensity of the each of the target detection signals.

**2.** The target detection device according to claim 1,
wherein the target detection unit is configured to detect a target detection signal having a largest signal intensity among the target detection signals for the plurality of range gates, and to output the target detection signal as a target signal indicating a detected target.

**3.** The target detection device according to claim 1,
wherein the target detection unit is configured to output a target signal indicating that a target is detected, when any one of the target detection signals for the plurality of range gates has a signal intensity indicating that target detection is positive.

**4.** The target detection device according to any one of claims 1 to 3,
wherein the plurality of range gates are shifted in terms of time by an amount that comprises an interval of the sampling clock.

**5.** The target detection device according to any one of claims 1 to 3, wherein the plurality of range gates are shifted in terms of time by an amount that comprises a plurality of clock intervals of the sampling clock.

**6.** The target detection device according to any one of claims 1 to 5, wherein the plurality of range gates are set to avoid overlapping with the transmission pulse.

**7.** A target detection method, comprising:

- emitting, by a transmit/receive antenna, a transmission pulse to air, and receiving, by the transmit/receive antenna, a received signal being a reflection wave of the transmission pulse;
- performing A/D conversion on the received signal; and setting a plurality of range gates to be sequentially shifted in terms of time based on a sampling clock, each of the plurality of range gates defining a data acquisition position;
- obtaining target detection signals each having a signal intensity that is variable depending on a ratio of received data obtained through the A/D conversion of the received signal to the each of the plurality of range gates in terms of time; and outputting a signal indicating that target detection is positive based on the signal intensity of the each of the target detection signals.


**Amended claims under Art. 19.1 PCT**

**1.** (Currently amended) A target detection device, comprising:

a signal transmit/receive unit configured to emit a transmission pulse to air by a transmit/receive antenna, and to receive a received signal being a reflection wave of the transmission pulse by the transmit/receive antenna; and
a target detection unit configured to: perform A/D conversion on the received signal; set a plurality of range gates to be sequentially shifted in terms of time based on a sampling clock, each of the plurality of range gates defining a data acquisition position; obtain, simultaneously for the plurality of range gates that are set, target detection signals each having a signal intensity that is variable depending on a ratio of received data obtained through the A/D conversion of the received signal to the each of the plurality of range gates in terms of time; suppress clutter outside a band frequency by a digital filter; and output a signal indicating that target detection is positive based on a signal intensity of the target detection signal in which the clutter is suppressed.

**2.** (Currently amended) The target detection device according to claim 1, wherein the target detection unit is configured to detect a target detection signal having a largest signal intensity in a corresponding entire range based on signal intensities simultaneously obtained for the plurality of range gates, and to output the target detection signal as a target signal indicating a detected target.

**3.** A target detection device according to claim 1,
wherein the target detection unit is configured to output a target signal indicating that a target is detected, when any one of the target detection signals for the plurality of range gates has a signal intensity indicating that target detection is positive.

4. The target detection device according to any one of claims 1 to 3, wherein the plurality of range gates are shifted in terms of time by an amount that comprises an interval of the sampling clock.

5. The target detection device according to any one of claims 1 to 3, wherein the plurality of range gates are shifted in terms of time by an amount that comprises a plurality of clock intervals of the sampling clock.

6. The target detection device according to any one of claims 1 to 5, wherein the plurality of range gates are set to avoid overlapping with the transmission pulse.

7. (Currently amended) A target detection method, comprising:

- emitting, by a transmit/receive antenna, a transmission pulse to air, and receiving, by the transmit/receive antenna, a received signal being a reflection wave of the transmission pulse;
- performing A/D conversion on the received signal; and setting a plurality of range gates to be sequentially shifted in terms of time based on a sampling clock, each of the plurality of range gates defining a data acquisition position;
- obtaining, simultaneously for the plurality of range gates that are set, target detection signals each having a signal intensity that is variable depending on a ratio of received data obtained through the A/D conversion of the received signal to the each of the plurality of range gates in terms of time; suppressing clutter outside a band frequency by a digital filter; and outputting a signal indicating that target detection is positive based on a signal intensity of the target detection signal in which the clutter is suppressed.

**Statement under Art. 19.1 PCT**

In claims 1 and 7 of Claims, the following amendments are made: "to perform processing simultaneously for the plurality of range gates that are set" (based on paragraph [0011]) and "to suppress clutter outside a band frequency by a digital filter" (based on paragraph [0017]).

In claim 2 of Claims, the following amendment is made: "to detect a target detection signal having a largest signal intensity in a corresponding entire range based on signal intensities simultaneously obtained for the plurality of range gates" (based on paragraph [0017]).

# FIG. 1

FIG. 1 — Block diagram showing: 1 TRANSMISSION SIGNAL GENERATOR → 2 PULSE MODULATOR → 3 POWER AMPLIFIER → 4 TRANSMIT/RECEIVE SWITCH → 5 TRANSMIT/RECEIVE ANTENNA (21, 22). Receive path: 6 FREQUENCY CONVERTER → 7 A/D CONVERTER → Range Gate Processing Sections ($8_1$ RANGE GATE PROCESSING SECTION (1), $8_2$ RANGE GATE PROCESSING SECTION (2), $8_3$ RANGE GATE PROCESSING SECTION (3), $8_4$ RANGE GATE PROCESSING SECTION (4), ... $8_n$ RANGE GATE PROCESSING SECTION (n)) → 9 DIGITAL FILTER → 10 DOPPLER FILTER → 11 TARGET DETECTION PROCESSING SECTION → 12 LARGEST VALUE DETECTION PROCESSING SECTION.

8

FIG. 2

EP 3 306 342 A1

TRANSMISSION PULSE

RECEIVED SIGNAL

RANGE GATE OF PRIOR ART

SAMPLING CLOCK

RANGE GATE 1

RANGE GATE 2

RANGE GATE 3

RANGE GATE 4

RANGE GATE 5

RANGE GATE 6

RANGE GATE 7

RANGE GATE 8

RANGE GATE n

# FIG. 3

## INTERNATIONAL SEARCH REPORT

| International application No. |
| --- |
| PCT/JP2015/065563 |

**A. CLASSIFICATION OF SUBJECT MATTER**

*G01S13/18*(2006.01)i

According to International Patent Classification (IPC) or to both national classification and IPC

**B. FIELDS SEARCHED**

Minimum documentation searched (classification system followed by classification symbols)
G01S13/18

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2000-147100 A (Mitsubishi Electric Corp.), 26 May 2000 (26.05.2000), paragraphs [0010], [0049] to [0051]; fig. 7 (Family: none) | 1–7 |
| A | US 6078281 A (Milkovich Systems Engineering), 20 June 2000 (20.06.2000), column 28, lines 38 to 63 & WO 98/02760 A1 | 1–7 |

☐ Further documents are listed in the continuation of Box C.   ☐ See patent family annex.

| | |
| --- | --- |
| \*    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 12 August 2015 (12.08.15) | 25 August 2015 (25.08.15) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GEORGE W. STIMSON.** INTRODUCTION TO AIR-BORNE RADAR. Hughes Aircraft Co, June 1983, 455